# EUROPEAN PATENT APPLICATION

(11) **EP 4 582 251 A1**
(43) Date of publication of application: **09.07.2025**
(21) Application number: 23860163.7
(22) Date of filing: 23.08.2023
(51) Int. Cl.: B32B 25/08, B32B 25/14, B60C 7/00, C08K 3/011, C08K 3/30, C08L 21/00

(54) **LAMINATE, METHOD FOR MANUFACTURING LAMINATE, AND TIRE**

(30) Priority: 31.08.2022 JP 2022138776
(71) Applicant: BRIDGESTONE CORPORATION, Chuo-ku Tokyo 104-8340 (JP)
(72) Inventor: MATSUSHITA Junko, Tokyo 104-8340 (JP)
(74) Representative: Marks & Clerk LLP
(86) International application number: PCT/JP2023/030387
(87) International publication number: WO 2024/048400

(57) **Abstract**

The present disclosure is directed to providing a laminate with excellent bonding strength. The solution to this problem is a laminate (1) including a rubber layer (2) made of a vulcanized rubber and a resin layer (3), where the rubber layer (2) and the resin layer (3) are bonded together. The rubber layer (2) includes a surface-treated layer (4) on the surface bonded to the resin layer (3), and the surface of the resin layer (3) bonded to the rubber layer (2) has a ratio of the height of the peak derived from the (010) plane to the height of the peak derived from the (100) plane in X-ray diffraction [(the height of the peak derived from the (010) plane) / (the height of the peak derived from the (100) plane) of 1.1 or more.

## Description

### TECHNICAL FIELD

The present disclosure relates to a laminate, a method for manufacturing a laminate, and a tire.

### BACKGROUND

In recent years, to avoid the occurrence of punctures, non-pneumatic tires that include a resin-made skeleton member and a rubber-made tread member have been proposed, which do not require pressurized air to be filled inside.

Furthermore, from the perspective of resource recycling, there is an increasing need for so-called retreading, where a worn rubber-made tread member is removed from a resin-made skeleton member and a new tread member is attached to the resin-made skeleton member. Here, since the new tread member attached to a skeleton member generally made of vulcanized rubber, it is necessary to reliably bond the resin-made skeleton member that has already been produced with the tread member made of vulcanized rubber.

For example, with regard to the adhesion between polyester and vulcanized rubber, as disclosed in PTL 1 below, a method is known in which a member made of polyester (resin layer) and a member made of vulcanized rubber (rubber layer) are bonded via an adhesive layer made of a urethane-based adhesive or an epoxy-based adhesive. Additionally, as disclosed in PTL 2 below, a method is known in which surface-treated vulcanized rubber is inserted into a mold, and molten polyester is injected into the mold for adhesion.

### CITATION LIST

### Patent Literature

PTL 1: WO 2020/105438 A1
PTL 2: JP S56-024146 A

### SUMMARY

### (Technical Problem)

However, in the method disclosed in PTL 1, since an adhesive is applied to the resin member (resin layer) or the rubber-made member (rubber layer) to form the adhesive layer, the process is complicated. Moreover, the method disclosed in PTL 2 is not applicable for bonding a resin member (resin layer) that has already been produced with a rubber-made member (rubber layer) made of vulcanized rubber, as it requires the resin to be melted and injected into the mold.

Accordingly, the present disclosure is directed to resolving the above-mentioned issue of the prior art and to providing a laminate, which can be obtained by bonding a resin layer that has already been produced with a rubber layer made of a vulcanized rubber without using an adhesive, and a method for manufacturing such a laminate that exhibits excellent bonding strength.

The present disclosure is further directed to providing a tire that includes such a laminate and has excellent durability.

### (Solution to Problem)

The primary features of a laminate, a method for manufacturing a laminate, and a tire of the present disclosure that solves the above problem are as follows.
[1] A laminate comprising a rubber layer made of a vulcanized rubber and a resin layer, the rubber layer and the resin layer being bonded together,
   the rubber layer comprising a surface-treated layer on a surface that is bonded to the resin layer, and
   a surface of the resin layer bonded to the rubber layer having a ratio of a height of a peak derived from a (010) plane to a height of a peak derived from a (100) plane in X-ray diffraction [(the height of the peak derived from the (010) plane) / (the height of the peak derived from the (100) plane)] of 1.1 or more.
[2] The laminate according to [1], wherein the surface-treated layer of the rubber layer is a chlorinated layer.
[3] The laminate according to [1] or [2], wherein the surface of the resin layer bonded to the rubber layer has an average length of crystal sizes in a region up to a depth of 250 µm of 10 µm or less.
[4] The laminate according to any one of [1] to [3], wherein the resin layer contains at least one resin component selected from the group consisting of polyester resin, modified polyolefin resin, acrylonitrile-butadiene-styrene copolymer resin, polyester-based thermoplastic elastomer, and polyolefin-based thermoplastic elastomer.
[5] The laminate according to [4], wherein the resin layer contains polyester resin or polyester-based thermoplastic elastomer.
[6] The laminate according to any one of [1] to [5], wherein the surface of the resin layer bonded to the rubber layer has a ratio of an area of the peak derived from the (010) plane to an area of the peak derived from the (100) plane in X-ray diffraction [(the area of the peak derived from the (010) plane) / (the area of the peak derived from the (100) plane)] of 1.3 or more.
[7] A method for manufacturing a laminate comprising a rubber layer made of a vulcanized rubber and a resin layer, the rubber layer and the resin layer being bonded together, the method comprising:
   applying a surface treatment to at least a part of a surface of the rubber layer that is to be bonded with the resin layer;
   applying a surface treatment such that a ratio of a height of a peak derived from a (010) plane to a height of a peak derived from a (100) plane in X-ray diffraction [(the height of the peak derived from the (010) plane) / (the height of the peak derived from the (100) plane)] of at least a part of a surface of the resin layer to be bonded to the rubber layer is 1.1 or more; and
   bonding the surface of the rubber layer that has been surface-treated and the surface of the resin layer that has been surface-treated, without using an adhesive.
[8] A tire comprising the laminate according to any one of [1] to [6].
[9] The tire according to [8],
   wherein the tire is a non-pneumatic tire comprising an inner cylinder that is to be mounted on a wheel, an outer cylinder that surrounds the inner cylinder from an outer side in a tire radial direction, a plurality of connecting members arranged along a tire circumferential direction between the inner cylinder and the outer cylinder to connect the cylinders, and a tread member provided on an outer side of the outer cylinder in the tire radial direction, and
   the outer cylinder is the resin layer, and the tread member is the rubber layer.

### (Advantageous Effect)

According to the present disclosure, it is possible to provide a laminate, which can be obtained by bonding a resin layer that has already been produced with a rubber layer made of a vulcanized rubber without using an adhesive, and a method for manufacturing such a laminate that exhibits excellent bonding strength.

Furthermore, according to the present disclosure, it is possible to provide a tire that includes such a laminate and has excellent durability.

### BRIEF DESCRIPTION OF THE DRAWINGS

In the accompanying drawings:
FIG. 1 is a schematic cross-sectional view in the thickness direction illustrating the laminate of the present embodiment;
FIG. 2 is an outline view schematically illustrating the structure of a non-pneumatic tire according to one embodiment of the present disclosure, viewed from the side of the tire;
FIG. 3 is an X-ray diffraction chart of the surface of the resin-made skeleton member obtained in Example 1;
FIG. 4 is an X-ray diffraction chart of the surface of the resin-made skeleton member obtained in Comparative Example 1;
FIG. 5 is an X-ray diffraction chart of the surface of the resin-made skeleton member obtained in Comparative Example 2;
FIG. 6 is an X-ray diffraction chart of the surface of the resin-made skeleton member obtained in Example 2;
FIG. 7 is an X-ray diffraction chart of the surface of the resin-made skeleton member obtained in Example 4;
FIG. 8 is a polarized microscope image of the surface of the resin-made skeleton member obtained in Comparative Example 2; and
FIG. 9 is a polarized microscope image of the surface of the resin-made skeleton member obtained in Example 2.

### DETAILED DESCRIPTION

A laminate, a method for manufacturing a laminate, and a tire according to the present disclosure will be exemplified and described in detail with reference to one embodiment thereof.

### <Definitions>

The compounds described in this specification may be partially or entirely derived from fossil resources, biological resources such as plant resources, or recycled resources such as used tires. Alternatively, they may be derived from a mixture of two or more of fossil resources, biological resources, and recycled resources.

Furthermore, in this specification, the ratio of the height of the peak derived from the (010) plane to the height of the peak derived from the (100) plane is determined by an X-ray diffraction analysis. If no peak derived from the (100) plane is observed, the maximum diffraction intensity (CPS) in the diffraction angle (2θ) in the range of 20° to 25° is taken as the height of the peak derived from the (100) plane.

Additionally, in this specification, the ratio of the area of the peak derived from the (010) plane to the area of the peak derived from the (100) plane is determined by performing X-ray diffraction analysis and using the pseudo Voigt function as the fitting program to separate peaks in the obtained X-ray diffraction chart.

Furthermore, in this specification, the average length of crystal sizes in the region up to a depth of 250 µm in the resin layer is determined by analyzing thin sections sampled from the surface of the resin layer under a polarized microscope, measuring the long sides of 20 crystals in the obtained image, and calculating the average.

### <Laminate>

A laminate of the present embodiment includes a rubber layer made of a vulcanized rubber and a resin layer, wherein the rubber layer and the resin layer are bonded together. In the laminate of the present embodiment, the rubber layer includes a surface-treated layer on the surface bonded to the resin layer, and the surface of the resin layer bonded to the rubber layer has a ratio of the height of the peak derived from the (010) plane to the height of the peak derived from the (100) plane in X-ray diffraction [(the height of the peak derived from the (010) plane) / (the height of the peak derived from the (100) plane)] of 1.1 or more.

As described above, there is an increasing need for retreading, in which a worn tread member is removed from a resin-made skeleton member and a new tread member is attached to the resin-made skeleton member. To address this issue, the present inventor has conducted a detailed investigation on the surface state of a resin-made skeleton member after a tread member has been removed *(i.e.,* after retreading). As a result, it was found that the surface of the resin-made skeleton member after retreading exhibits increased crystallization, and the peak derived from the (100) plane in X-ray diffraction is increased. It is known that when a resin including crystals is analyzed by X-ray diffraction, the peak derived from the (010) plane and the peak derived from the (100) plane are observed (see, for example, Japanese Journal of Polymer Science and Technology, Vol. 66, No. 12, pp. 598-604 (Dec. 2009)).

The present inventor conducted extensive investigations on the bonding strength between the rubber layer and the resin layer and the intensities of the respective peaks in X-ray diffraction. As a result, it was found that when the ratio of the height of the peak derived from the (010) plane to the height of the peak derived from the (100) plane in X-ray diffraction [(the height of the peak derived from the (010) plane) / (the height of the peak derived from the (100) plane)] of the surface of the resin layer is 1.1 or more, the bonding strength between the rubber layer and the resin layer is enhanced.

Additionally, applying a surface treatment to the surface of the rubber layer that is bonded with the resin layer, thereby forming a surface-treated layer in the outermost portion of the rubber layer, can further enhance the bonding strength between the rubber layer and the resin layer.

Accordingly, the laminate of the present embodiment exhibits excellent bonding strength between the rubber layer and the resin layer.

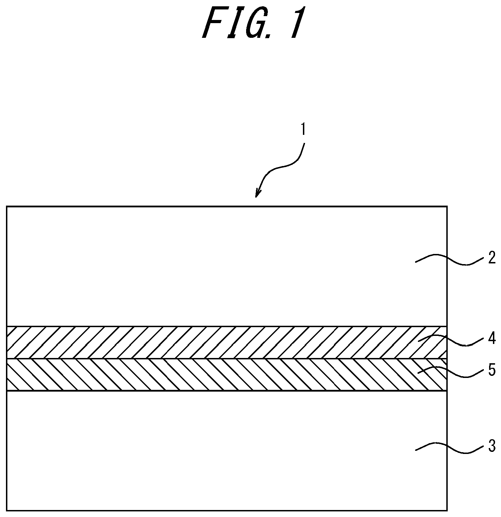

Next, the laminate according to one embodiment of the present disclosure will be described with reference to FIG. 1. FIG. 1 is a schematic cross-sectional view in the thickness direction of the laminate of the present embodiment. As illustrated in FIG. 1, the laminate 1 includes a rubber layer 2 and a resin layer 3, wherein the rubber layer 2 and the resin layer 3 are bonded together.

The laminate 1 of the present embodiment includes the rubber layer 2 made of vulcanized rubber. Various rubber compositions containing at least a rubber component may be used for the rubber layer 2, and it is preferable to form the rubber layer 2 using vulcanized rubber obtained by vulcanizing such a rubber composition. The rubber composition can be prepared, for example, by kneading, heat-treating, extruding, etc., a mixture of rubber components such as natural rubber or synthetic rubber (*e.g.,* butadiene rubber, styrene-butadiene rubber, isoprene rubber, chloroprene rubber) with additives including fillers such as carbon black or silica, antioxidants, softeners, stearic acid, crosslinking agents such as peroxides and sulfur, and crosslinking accelerators.

Examples of the antioxidants include N-(1,3-dimethylbutyl)-N'-phenyl-p-phenylenediamine (6PPD), 2,2,4-trimethyl-1,2-dihydroquinoline polymer (TMDQ), 6-ethoxy-2,2,4-trimethyl-1,2-dihydroquinoline (AW), N,N'-diphenyl-p-phenylenediamine (DPPD), N,N'-bis(1,4-dimethylpentyl)-p-phenylenediamine (77PD), N,N'-bis(1-ethyl-3-methylpentyl)-p-phenylenediamine, and N,N'-dicyclohexyl-p-phenylenediamine (CCPD).

The content of the antioxidants is not particularly limited and is preferably in the range of 0.1 to 15 parts by mass, more preferably 1 to 10 parts by mass, per 100 parts by mass of the rubber component.

Examples of softeners include softeners derived from fossil resources (particularly softeners derived from petroleum) and softeners derived from biological resources (particularly softeners derived from plants). Examples of softeners derived from fossil resources include aromatic oils, paraffinic oils, and naphthenic oils. Examples of softeners derived from biological resources include palm oil, castor oil, cottonseed oil, and soybean oil. Additionally, a mixture of naphthenic oil and asphalt may be used as the softener.

The content of the softener is not particularly limited, but it is preferably in the range of 1 to 150 parts by mass and more preferably in the range of 5 to 100 parts by mass per 100 parts by mass of the rubber component.

The rubber layer 2 is at least partially bonded to the resin layer 3. Furthermore, the rubber layer 2 includes a surface-treated layer 4 on the surface that is bonded to the resin layer 3. Here, the surface-treated layer 4 of the rubber layer 2 is a layer that has undergone a surface treatment to improve the bonding strength with the resin layer 3. The interface between the surface-treated layer 4 and the other parts of the rubber layer 2 can be determined by identifying traces of the applied surface treatment. The average distance from the surface of the rubber layer 2 *(i.e.,* the surface of the rubber layer 2 on the side bonded to the resin layer 3) to the trace of the surface treatment is regarded as the average thickness of the surface-treated layer 4. The average thickness of the surface-treated layer 4 is not particularly limited but is preferably 10 µm or less.

The surface treatment applied to the rubber layer 2 is preferably a chlorination treatment. In other words, the surface-treated layer 4 of the rubber layer 2 is preferably a chlorinated layer. In this case, the trace of the surface treatment is represented by chlorine within the rubber layer 2. The average distance from the surface of the rubber layer 2 to the deepest point where chlorine is present in the rubber layer 2 is regarded as the average thickness of the surface-treated layer 4. When the surface-treated layer 4 of the rubber layer 2 is a chlorinated layer, the bonding strength between the rubber layer 2 and the resin layer 3 is further enhanced.

The chemical agent (surface treatment agent) used for the chlorination treatment is preferably a hypochlorous acid aqueous solution or chlorinated isocyanuric acid. By applying a surface treatment using such a chemical agent, the bonding strength between the rubber layer 2 and the resin layer 3 is even further improved.

It is considered that when the surface of the rubber layer (vulcanized rubber) 2 is subjected to chlorination, an oxidation (chlorination) reaction occurs at the olefinic portions, in at least part of the surface of the rubber layer 2. It is considered that when a hypochlorous acid aqueous solution is used for the chlorination treatment, chlorine and hydroxyl groups are introduced to the carbon atoms forming C=C double bonds in the rubber molecules present on the surface of the rubber layer 2 during the oxidation (chlorination) reaction, according to the mechanism described below. The introduction of these groups increases the polarity of the surface of the rubber layer 2, enhancing the wettability, which contributes to stronger bonding.

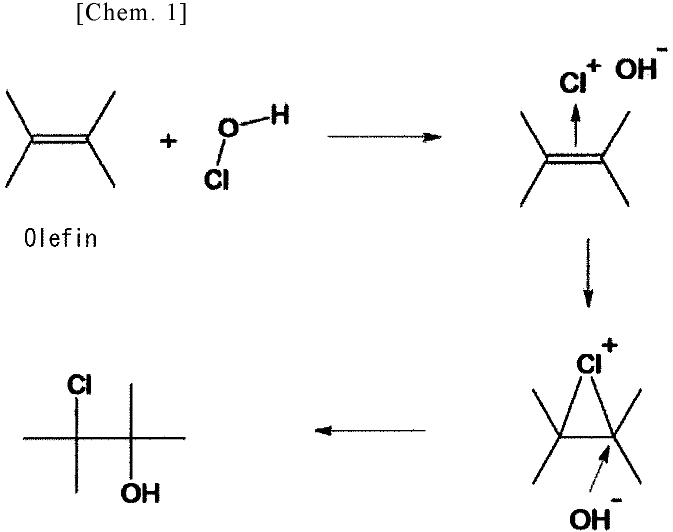

The pH value of the hypochlorous acid aqueous solution as the surface treatment agent is preferably 2 or higher and 7 or lower. When the pH value is 2 or higher, the release of chlorine gas is reduced and it becomes easier to maintain the effective chlorine concentration of the hypochlorous acid aqueous solution within the desired range. When the pH value is 7 or lower, the bonding strength between the rubber layer 2 and the resin layer 3 tends to be further enhanced. From the perspective of stability, the pH value of the hypochlorous acid aqueous solution is more preferably 4 or higher.

The effective chlorine concentration of the hypochlorous acid aqueous solution is preferably 100 ppm or higher and 13,000 ppm or lower. When the effective chlorine concentration is 100 ppm or higher and 13,000 ppm or lower, the bonding strength between the rubber layer 2 and the resin layer 3 tends to be further enhanced. From a similar perspective, the effective chlorine concentration of the hypochlorous acid aqueous solution is more preferably 200 ppm or higher, even more preferably 300 ppm or higher, and more preferably 8000 ppm or lower, further preferably 4000 ppm or lower, even more preferably 1000 ppm or lower, and particularly preferably 500 ppm or lower.

The effective chlorine concentration of the hypochlorous acid aqueous solution can be adjusted, for example, by controlling the dilution ratio when a hypochlorite such as sodium hypochlorite is dissolved in water to obtain the aqueous solution.

Furthermore, the pH value of the hypochlorous acid aqueous solution can be lowered, for example, by adding hydrochloric acid to the hypochlorous acid aqueous solution, and the pH value can be adjusted by the amount of hydrochloric acid added. It should be noted that the pH value of an aqueous solution obtained by dissolving sodium hypochlorite in water is approximately 9 to 10. Additionally, when a large amount of chlorine is added to the hypochlorous acid aqueous solution or chlorine is quickly added, chlorine gas is generated, which consequently lowers the effective chlorine concentration. Therefore, caution should be exercised during adjustment.

The chlorinated isocyanuric acids are not particularly limited and examples include, for example, dichloroisocyanuric acid and trichloroisocyanuric acid. The chlorinated isocyanuric acid may be used alone or in combination of two or more types. Among these, from the perspective of further enhancing the bonding strength between the rubber layer 2 and the resin layer 3, trichloroisocyanuric acid is preferred as the chlorinated isocyanuric acid.

The chlorinated isocyanuric acid is preferably used in the form of an aqueous solution. The concentration of the chlorinated isocyanuric acid in the aqueous solution is not particularly limited but is preferably 0.5 mass% or more and 10 mass% or less from the perspectives of bonding strength between the rubber layer 2 and the resin layer 3, as well as workability.

The laminate 1 of the present embodiment includes the resin layer 3. It should be noted that the resin layer 3 may be a resin layer that has been molded. The resin layer 3 is at least partially bonded to the rubber layer 2. Furthermore, the surface of the resin layer 3 bonded to the rubber layer 2 has a ratio of the height of the peak derived from the (010) plane to the height of the peak derived from the (100) plane in X-ray diffraction [(the height of the peak derived from the (010) plane) / (the height of the peak derived from the

(100) plane)] of 1.1 or more, preferably 1.3 or higher. When the ratio of the height of the peak derived from the (010) plane to the height of the peak derived from the (100) plane is 1.1 or more, the crystallinity of the surface of the resin layer 3 bonded to the rubber layer 2 is sufficiently low, and the bonding strength between the resin layer 3 and the rubber layer 2 becomes sufficiently excellent.

It is known that the peak derived from the (100) plane of the resin contained in the resin layer 3 is observed in the range of a diffraction angle (2θ) of 20° to 25°, whereas the peak derived from the (010) plane is observed at a lower angle range (for example, 2θ is in the range of 15° to 20°), in X-ray diffraction. However, as will be described later, when the resin layer 3 is subjected to a solvent treatment, the peak derived from the (100) plane may not appear in X-ray diffraction. Therefore, if a peak derived from the (100) plane does not appear in X-ray diffraction, the maximum diffraction intensity (CPS) in the range of a diffraction angle (2θ) of 20° to 25° is defined as the height of the peak derived from the (100) plane.

The surface of the resin layer 3 bonded to the rubber layer 2 preferably has a ratio of the area of the peak derived from the (010) plane to the area of the peak derived from the (100) plane in X-ray diffraction [(the area of the peak derived from the (010) plane) / (the area of the peak derived from the (100) plane)] of 1.3 or greater. When the ratio of the area of the peak derived from the (010) plane to the area of the peak derived from the (100) plane is 1.3 or greater, the crystallinity of the surface of the resin layer 3 bonded to the rubber layer 2 is further reduced, and the bonding strength between the resin layer 3 and the rubber layer 2 is further enhanced.

It should be noted that, as will be described later, when the resin layer 3 is subjected to a solvent treatment, the peak derived from the (100) plane may not appear in X-ray diffraction. In such cases where the peak derived from the (100) plane is not observed, the area of the peak derived from the (100) plane is considered to be 0, and the ratio of the area of the peak derived from the (010) plane to the area of the peak derived from the (100) plane [(the area of the peak derived from the (010) plane) / (the area of the peak derived from the (100) plane)] becomes infinite. Such cases are also one of the preferred embodiments of the present disclosure.

The surface of the resin layer 3 bonded to the rubber layer 2 preferably has an average length of crystal sizes in the region 5 up to a depth of 250 µm of 10 µm or less. Here, the crystal sizes in the region 5 up to a depth of 250 µm from the surface of the resin layer 3 are measured under a polarized light microscope. The lengths of the long sides of the crystals observed under the polarized light microscope are measured, and the average value of the lengths of the long sizes of 20 observed crystals is taken as the average length of the crystal size. However, it is also preferred that no crystals are present in the region 5 up to a depth of 250 µm from the surface of the resin layer 3 *(i.e.,* no crystals are observed under the polarized light microscope). In other words, the average length of crystal sizes is preferably 0 µm. Crystals of the resin with long sides exceeding 10 µm exhibit low reactivity with the rubber layer 2. Therefore, when the average length of the crystal sizes in the region 5 up to a depth of 250 µm from the surface of the resin layer 3 is 10 µm or less, the bonding strength between the rubber layer 2 and the resin layer 3 is further enhanced.

A resin component may be used alone or a composition containing the resin component (resin composition) may be used for the resin layer 3. Here, the resin component is preferably a thermoplastic resin or a thermoplastic elastomer, with thermoplastic elastomers being more preferred. Furthermore, various additives may be added to the resin composition in addition to the resin component. It should be noted that the content of the resin component in the resin composition is preferably 80 mass% or more, and more preferably 90 mass% or more.

Herein, thermoplastic resins and thermoplastic elastomers are polymeric compounds forming materials that soften and flow in accompaniment to an increase in temperature, and that adopt a relatively hard and strong state when cooled. In the present specification, thermoplastic resins and thermoplastic elastomers are distinguished between by using the term "thermoplastic elastomer" to refer to a polymeric compound forming a material that softens and flows in accompaniment to an increase in temperature, that adopts a relatively hard and strong state when cooled, and that has rubbery elasticity, and the term "thermoplastic resin" is used to refer to a polymeric compound forming a material that softens and flows in accompaniment to an increase in temperature, that adopts a relatively hard and strong state when cooled, and that does not have rubbery elasticity.

The term "thermoplastic elastomer" refers to a thermoplastic resin material having a hard segment and a soft segment in the molecule. Specifically, it is a high-molecular-weight compound with elasticity, having a copolymer with a polymer composing the hard segment that is crystalline and has a high melting point and a polymer composing the soft segment that is amorphous and has a low glass transition temperature. It should be noted that the thermoplastic elastomer in the present disclosure does not encompass vulcanized rubbers such as natural rubber or synthetic rubber.

Examples of the thermoplastic resin include polyester resins, polyolefin resins, polystyrene resins, and acrylonitrile-butadiene-styrene copolymer resins (ABS resins).

The polyester resin is a resin that has ester bonds in the main chain thereof. Although there are no particular limitations on the polyester resin, crystalline polyesters are preferred. As the crystalline polyester, aromatic polyesters can be used. The aromatic polyester can for example be formed from an aromatic dicarboxylic acid or ester-forming derivative thereof and an aliphatic diol.

The aromatic polyester may, for example, be polyethylene terephthalate, polybutylene terephthalate, polystyrene terephthalate, polyethylene naphthalate, or polybutylene naphthalate, and is preferably polybutylene terephthalate.

One example of the aromatic polyester is polybutylene terephthalate, which is derived from terephthalic acid and/or dimethyl terephthalate and 1,4-butanediol. Furthermore, polyesters derived from a dicarboxylic acid component such as isophthalic acid, phthalic acid, naphthalene-2,6-dicarboxylic acid, naphthalene-2,7-dicarboxylic acid, diphenyl-4,4'-dicarboxylic acid, diphenoxyethane dicarboxylic acid, 5-sulfoisophthalic acid, or ester-forming derivatives thereof, and a diol with a molecular weight of 300 or less, including, for example, aliphatic diols such as ethylene glycol, trimethylene glycol, pentamethylene glycol, hexamethylene glycol, neopentyl glycol, and decamethylene glycol, alicyclic diols such as 1,4-cyclohexanedimethanol and tricyclodecanedimethanol, and aromatic diols such as xylylene glycol, bis(p-hydroxy)diphenyl, bis(p-hydroxyphenyl)propane, 2,2-bis[4-(2-hydroxyethoxy)phenyl]propane, bis[4-(2-hydroxy)phenyl]sulfone, 1,1-bis[4-(2-hydroxyethoxy)phenyl]cyclohexane, 4,4'-dihydroxy-p-terphenyl, and 4,4'-dihydroxy-p-quarterphenyl, may be used. Alternatively, copolyesters formed from these dicarboxylic acid components and diol components in combinations of two or more may be used. Moreover, it is also possible to copolymerize multifunctional carboxylic acid components, multifunctional oxyacid components, and multifunctional hydroxy components, in amounts of 5 mol% or less.

As the polyester resin, commercially available products can also be used, such as the "DURANEX" series (*e.g.,* 2000, 2002, etc.) manufactured by Polyplastics Co., Ltd., the "NOVADURAN" series (*e.g.,* 5010R5, 5010R3-2, etc.) manufactured by Mitsubishi Engineering Plastics Corporation, the "Toraycon" series (*e.g.,* 1401X06, 1401X31, 1401X70, etc.) manufactured by Toray Industries, Inc., and the "Planac" series (*e.g.,* BT-1000) manufactured by Toyobo Co., Ltd., for example.

The polyolefin resin is a polymer having an olefin, such as ethylene, propylene, or 1-butene, in the main chain thereof. Examples of the polyolefin resin include polyethylene, polypropylene, polybutene, cycloolefin-based resins, and copolymers of these resins, for example. Among these, polyethylene, polypropylene, and ethylene-propylene copolymers are preferred, with polypropylene and ethylene-propylene copolymers being more preferred.

As the polyolefin resin, commercially available products can also be used, such as Prime PP^{®} manufactured by Prime Polymer Co., Ltd., and NOVATEC PP^{®} and WINTEC^{®} manufactured by Japan Polypropylene Corporation, for example.

It is preferable that the polyolefin resin is modified, in other words, the polyolefin resin is preferably a modified polyolefin resin. Examples of modified polyolefin resins include maleic anhydride-modified polyolefin resins, acrylic acid-modified polyolefin resins, and methacrylic acid-modified polyolefin resins.

As the modified polyolefin resin, commercially available products can also be used, such as the "Umex" series manufactured by Sanyo Chemical Industries, Ltd., which are maleic anhydride-modified polypropylene-based resins, the "CB Polymer" series manufactured by Kuraray Co., Ltd., which are carboxylic acid-modified polypropylene-based resins, and the "Admer" series manufactured by Mitsui Chemicals, Inc., which are maleic anhydride-modified polypropylene-based resins, for example.

The polystyrene resin is a polymer of styrene. As the polystyrene resin, commercially available products can also be used, such as XAREC^{®} manufactured by Idemitsu Kosan Co., Ltd., Toyo Styrol^{®} manufactured by Toyo Styrene Co., Ltd., and CEVIAN manufactured by Daicel Polymer Ltd., for example.

The acrylonitrile-butadiene-styrene copolymer resin (ABS resin) is a terpolymer of acrylonitrile, butadiene, and styrene. As the ABS resin, commercially available products can also be used, such as Toyolac^{®} manufactured by Toray Industries, Inc., for example.

Examples of the thermoplastic elastomer include polyester-based thermoplastic elastomers (TPC), polyolefin-based thermoplastic elastomers (TPO), and polystyrene-based thermoplastic elastomers (TPS).

The polyester-based thermoplastic elastomer (TPC) refers to an elastic polymeric compound, and is a thermoplastic resin material made of copolymer having a polymer composing a hard segment that is crystalline and has a high melting point and a polymer composing a soft segment that is amorphous and has a low glass transition temperature, wherein ester bonds are present in the main chain of the polymer composing the hard segments.

An aromatic polyester can be used as a crystalline polyester that forms the hard segment of the polyester-based thermoplastic elastomer (TPC). The aromatic polyester can, for example, be formed from an aliphatic diol and an aromatic dicarboxylic acid or ester-forming derivative thereof. The aromatic polyester that forms the hard segment may, for example, be polyethylene terephthalate, polybutylene terephthalate, polystyrene terephthalate, polyethylene naphthalate, or polybutylene naphthalate, and is preferably polybutylene terephthalate.

One preferable example of the aromatic polyester that forms the hard segment is polybutylene terephthalate derived from 1,4-butanediol and either or both of terephthalic acid and dimethyl terephthalate. Furthermore, the aromatic polyester may be a polyester that is derived from a dicarboxylic acid component such as isophthalic acid, phthalic acid, naphthalene-2,6-dicarboxylic acid, naphthalene-2,7-dicarboxylic acid, diphenyl-4,4'-dicarboxylic acid, diphenoxyethane dicarboxylic acid, 5-sulfoisophthalic acid, or an ester-forming derivative of any of these dicarboxylic acids; and a diol component such as ethylene glycol, trimethylene glycol, pentamethylene glycol, hexamethylene glycol, neopentyl glycol, decamethylene glycol, 1,4-cyclohexanedimethanol, tricyclodecane dimethylol, xylylene glycol, bis(p-hydroxy)diphenyl, bis(p-hydroxyphenyl)propane, 2,2-bis[4-(2-hydroxyethoxy)phenyl]propane, bis[4-(2-hydroxy)phenyl]sulfone, 1,1-bis[4-(2-hydroxyethoxy)phenyl]cyclohexane, 4,4'-dihydroxy-p-terphenyl, or 4,4'-dihydroxy-p-quaterphenyl, or may be a copolymer polyester in which two or more types of dicarboxylic acid components and diol components such as described above are used in combination.

The polymer that forms the soft segment of the polyester-based thermoplastic elastomer (TPC) may, for example, be a polymer selected from aliphatic polyethers and aliphatic polyesters.

Examples of aliphatic polyethers that can be used include poly(ethylene oxide) glycol, poly(propylene oxide) glycol, poly(tetramethylene oxide) glycol, poly(hexamethylene oxide) glycol, a copolymer of ethylene oxide and propylene oxide, an ethylene oxide addition polymer of poly(propylene oxide) glycol, and a copolymer of ethylene oxide and tetrahydrofuran.

Examples of aliphatic polyesters that can be used include poly(ε-caprolactone), polyenantholactone, polycaprylolactone, polybutylene adipate, and polyethylene adipate.

Among the aliphatic polyethers and aliphatic polyesters listed above, poly(tetramethylene oxide) glycol, an ethylene oxide addition polymer of poly(propylene oxide) glycol, poly(e-caprolactone), polybutylene adipate, polyethylene adipate, and the like are preferable from a viewpoint of elasticity characteristics of the resultant copolymer.

The polyester-based thermoplastic elastomer can be synthesized by copolymerizing the polymer that forms the hard segment and the polymer that forms the soft segment by a commonly known method. As the polyester-based thermoplastic elastomer, commercially available products can also be used, such as the "Pelprene" series *(e.g.,* P30B, P40B, P40H, P-46D01, P55B, P70B, P90B, P120B, P150B, P280B, P450B, P150M, S1001, S2001, S5001, S6001, S9001, etc.) manufactured by Toyobo Co., Ltd., and the "Hytrel" series *(e.g.,* 3046, 5557, 5577, 5577R-07, 6347, 4047, 4767, 4767N, 4777, etc.) manufactured by Toray-DuPont Co., Ltd.

The polyolefin-based thermoplastic elastomer (TPO) refers to an elastic polymeric compound, and is a thermoplastic resin material made of copolymer having a polymer composing a hard segment that is crystalline and has a high melting point and a polymer composing a soft segment that is amorphous and has a low glass transition temperature, wherein the polymer composing the hard segment is a polyolefin such as polypropylene or polyethylene.

Examples of the polyolefin-based thermoplastic elastomer include materials in which at least the polyolefin composes a hard segment that is crystalline and has a high melting point, and the polyolefin and an olefin other than the polyolefin composes a soft segment that is amorphous and has a low glass transition temperature.

Examples of polyolefins that form the hard segment of the polyolefin-based thermoplastic elastomer include polypropylene, isotactic polypropylene, polyethylene, and poly-1-butene, for example.

Examples of polymers that form the soft segment of the polyolefin-based thermoplastic elastomer include ethylene-propylene copolymers, propylene-1-hexene copolymers, propylene-4-methyl-1-pentene copolymers, propylene-1-butene copolymers, ethylene-1-hexene copolymers, ethylene-4-methylpentene copolymers, ethylene-1-butene copolymers, 1-butene-1-hexene copolymers, and 1-butene-4-methylpentene copolymers, for example.

The polyolefin-based thermoplastic elastomer can be synthesized by copolymerizing the polymer that forms the hard segment and the polymer that forms the soft segment by a commonly known method. As the polyolefin-based thermoplastic elastomer, commercially available products can also be used, such as Prime TPO^{®} manufactured by Prime Polymer Co., Ltd., and Tafmer^{®} and NOTIO^{®} manufactured by Mitsui Chemicals, Inc., for example.

The polystyrene-based thermoplastic elastomer (TPS) refers to an elastomeric polymeric compound, and is a thermoplastic resin material made of a copolymer having a polymer composing a hard segment and a polymer composing a soft segment that is amorphous and has a low glass transition temperature, wherein the polymer composing the hard segment is polystyrene or polystyrene derivatives.

Although not particularly limited, examples of the polystyrene-based thermoplastic elastomer include copolymers in which polystyrene composes a hard segment and an amorphous polymer forms a soft segment that has a low glass transition temperature (e.g., polyethylene, polybutadiene, polyisoprene, hydrogenated polybutadiene, hydrogenated polyisoprene, or poly(2,3-dimethyl-butadiene)).

The polystyrene-based thermoplastic elastomer can be synthesized by copolymerizing the polymer composing the hard segment and the polymer composing the soft segment through known methods such as block copolymerization. As the polystyrene-based thermoplastic elastomer, commercially available product can also be used, such as TUFPRENE^{®} and TUFTEC^{®} manufactured by Asahi Kasei Corporation and SEPTON^{®} manufactured by Kuraray Co., Ltd., for example.

The resin layer 3 preferably contains at least one resin component selected from the group consisting of polyester resin, modified polyolefin resin, acrylonitrile-butadiene-styrene copolymer resin, polyester-based thermoplastic elastomer, and polyolefin-based thermoplastic elastomer. The polyester resin, modified polyolefin resin, acrylonitrile-butadiene-styrene copolymer resin, polyester-based thermoplastic elastomer, and polyolefin-based thermoplastic elastomer have sufficient strength to support loads. Therefore, the laminate 1 including the resin layer 3 that contains at least one resin component selected from the group consisting of polyester resin, modified polyolefin resin, acrylonitrile-butadiene-styrene copolymer resin, polyester-based thermoplastic elastomer, and polyolefin-based thermoplastic elastomer can be suitably used in the tire described later. In addition, a tire including such a laminate 1 excels in balancing ride comfort and durability.

The resin layer 3 further preferably contains polyester resin or polyester-based thermoplastic elastomer. The laminate 1 including a resin layer 3 that contains thermoplastic polyester or polyester-based thermoplastic elastomer can be preferably used in the tire described below. In addition, a tire including such a laminate 1 excels in balancing ride comfort and durability.

It is preferable that the resin composition used for the resin layer 3 contains a thermoplastic elastomer having a hard segment and a soft segment in the molecule thereof. The laminate 1 in which a resin composition that contains a thermoplastic elastomer having a hard segment and a soft segment in the molecule thereof is used for the resin layer 3 exhibits improved durability.

Here, it is preferable that the thermoplastic elastomer is a polyester-based thermoplastic elastomer. A laminate 1 in which a resin composition including a polyester-based thermoplastic elastomer is used for the resin layer 3 exhibits further improved durability.

Additionally, it is even more preferable that the hard segment of the polyester-based thermoplastic elastomer is polybutylene terephthalate. A resin composition including a polyester-based thermoplastic elastomer in which the hard segment is polybutylene terephthalate has high strength. A laminate 1 in which such a resin composition is used for the resin layer 3 exhibits particularly excellent durability.

The resin composition used in the resin layer 3 may also include additives in addition to the above-mentioned resin components, such as thermoplastic resins and thermoplastic elastomers. Examples of additives that are added to the resin composition include weathering and aging resistance agents, heat aging resistance agents, moisture-heat resistance agents, antistatic agents, lubricants, tackifiers, anti-fogging agents, release agents, plasticizers, fillers, pigments, dyes, fragrances, and flame retardants. Among these, weathering and aging resistance agents, heat aging resistance agents, and moisture-heat resistance agents are preferable, and weathering and aging resistance agents and heat aging resistance agents are particularly preferable. By adding a weathering and aging resistance agent and/or heat aging resistance agent to the resin composition, the stability of the resin composition is enhanced, and a laminate 1 in which such a resin composition is used for the resin layer 3 can maintain desired properties over an extended period. The total content of these additives is preferably 20 parts by mass or less, and even more preferably 10 parts by mass or less per 100 parts by mass of the resin components.

The weathering and aging resistance agent is an additive that has the effect of improving the weather resistance of the resin composition. Preferred examples of the weathering and aging resistance agent include benzotriazole-based compounds and amine-based compounds (hindered amine-based compounds).

Examples of benzotriazole-based compounds include, for example, 2-(2-hydroxy-5-tert-butylphenyl)-2H-benzotriazole, ester compounds of benzenepropanoic acid and 3-(2H-benzotriazol-2-yl)-5-(1,1-dimethylethyl)-4-hydroxy (C7-9 side chain and straight-chain alkyl), a mixture of octyl 3-[3-tert-butyl-4-hydroxy-5-(5-chloro-2H-benzotriazol-2-yl)phenyl]propionate and 2-ethylhexyl-3-[3-tert-butyl-4-hydroxy-5-(5-chloro-2H-benzotriazol-2-yl)phenyl]propionate, 2-(2H-benzotriazol-2-yl)-4,6-bis(1-methyl-1-phenylethyl)phenol, 2-(2H-benzotriazol-2-yl)-6-(1-methyl-1-phenylethyl)-4-(1,1,3,3-tetramethylbutyl)phenol, reaction products of methyl-3-(3-(2H-benzotriazol-2-yl)-5-tert-butyl-4-hydroxyphenyl)propionate/polyethylene glycol 300, 2-(2H-benzotriazol-2-yl)-p-cresol, 2-(2H-benzotriazol-2-yl)-4,6-bis(1-methyl-1-phenylethyl)phenol, 2-[5-chloro(2H)-benzotriazol-2-yl]-4-methyl-6-(tert-butyl)phenol, 2-(2H-benzotriazol-2-yl)-4,6-di-tertpentylphenol, 2-(2H-benzotriazol-2-yl)-4-(1,1,3,3-tetramethylbutyl)phenol, 2,2'-methylene bis[6-(2H-benzotriazol-2-yl)-4-(1,1,3,3-tetramethylbutyl)phenol], 2-(2H-benzotriazol-2-yl)-6-dodecyl-4-methylphenol, 2-[2-hydroxy-3-(3,4,5,6-tetrahydrophthaloylimido-methyl)-5-methylphenyl]benzotriazole, and 2,2'-methylene bis[6-(benzotriazol-2-yl)-4-tert-octylphenol].

Examples of amine-based compounds include, for example, bis(1,2,2,6,6-pentamethyl-4-piperidiny) [[3,5-bis(1,1-dimethylethyl)-4-hydroxyphenyl]methyl]butylmalonate, a mixture of bis(1,2,2,6,6-pentamethyl-4-piperidyl) sebacate and methyl 1,2,2,6,6-pentamethyl-4-piperidyl sebacate, bis(2,2,6,6-tetramethyl-4-piperidyl) sebacate, N,N'-bis(2,2,6,6-tetramethyl-4-piperidyl)-N,N'-diformylhexamethylenediamine, poly[{6-(1,1,3,3-tetramethylbutyl)amino-1,3,5-triazine-2,4-diyl} {2,2,6,6-tetramethyl-4-piperidyl}imino]hexamethylene{(2,2,6,6-tetramethyl-4-piperidyl)imino}], tetrakis(1,2,2,6,6-pentamethyl-4-piperidyl) butane-1,2,3,4-tetracarboxylate, tetrakis(2,2,6,6-tetramethyl-4-piperidyl) butane-1,2,3,4-tetracarboxylate, a reaction product of 1,2,2,6,6-pentamethyl-4-piperidiol and β,β,β',β'-tetramethyl-2,4,8,10-tetraoxaspiro[5.5]undecane-3,9-dietanol, a reaction product of 2,2,6,6-tetramethyl-4-piperidiol and β,β,β',β'-tetramethyl-2,4,8,10-tetraoxaspiro[5.5]undecane-3,9-dietanol, bis(1-undecanoxy-2,2,6,6-tetramethylpiperidin-4-yl)carbonate, 1,2,2,6,6-pentamethyl-4-piperidyl methacrylate, and 2,2,6,6-tetramethyl-4-piperidyl methacrylate.

By adding a weathering and aging resistance agent to the resin composition, the weather resistance of the resin composition is improved and the laminate in which this resin composition is used for the resin layer 3 can maintain the desired properties over the long term. The amount of the weathering and aging resistance agent added is preferably in the range of 1 to 5 parts by mass per 100 parts by mass of the resin component in the resin composition.

The heat aging resistance agent is an additive that has the effect of improving the heat resistance of the resin composition, and phenolic compounds (hindering phenolic compounds) are preferred as the heat aging resistance agents. Examples of phenolic compounds include, for example, 2,6-di-tert-butyl-4-methylphenol, n-octadecyl-3-(3,5-di-tert-butyl-4-hydroxyphenyl)propionate, tetrakis[methylene-3-(3,5-di-tert-butyl-4-hydroxyphenyl)propionate]methane, 2,4-di-tert-butyl-6-methylphenol, 1,6-hexanediol-bis[3-(3,5-di-tert-butyl-4-hydroxyphenyl)propionate], tris(3,5-di-tert-butyl-4-hydroxybenzyl)-isocyanurate, 1,3,5-trimethyl-2,4,6-tris(3,5-di-tert-butyl-4-hydroxybenzyl)benzene, pentaerythritol tetrakis[3-(3,5-di-tert-butyl-4-hydroxyphenyl)propionate], 3,9-bis[2-[3-(3-tert-butyl-4-hydroxy-5-methylphenyl)-propionyloxy]-1,1-dimethylethyl]-2,4,8,10-tetraoxaspiro[5.5]undecane, triethylene glycol-bis[3-(3-tert-butyl-5-methyl-4-hydroxyphenyl)propionate], 2,2'-butylidene bis(4,6-di-tert-butylphenol), 4,4'-butylidene bis(3-methyl-6-tert-butylphenol), 2,2'-methylene bis(4-methyl-6-tert-butylphenol), 2,2'-methylene bis(4-ethyl-6-tert-butylphenol), 2-tert-butyl-6-(3-tert-butyl-2-hydroxy-5-methylbenzyl)-4-methylphenol acrylate, 2-[1-(2-hydroxy-3,5-di-tert-pentylphenyl)ethyl]-4,6-di-tert-pentylphenylacrylate, 4,4'-thiobis(3-methyl-6-tert-butylphenol), 2-tert-butyl-4-methylphenol, 2,4-di-tert-butylphenol, 2,4-di-tertpentylphenol, 4,4'-thiobis(3-methyl-6-tert-butylphenol), 4,4'-butylidene bis(3-methyl-6-tert-butylphenol), bis[3,3-bis(4'-hydroxy-3'-tert-butylphenyl)-butanoic acid]-glycol ester, and N,N'-hexamethylene bis[3-(3,5-di-tert-butyl-4-hydroxyphenyl)propanamide], among others.

By adding a heat aging resistance agent to the resin composition, the heat resistance of the resin composition is improved and the laminate 1 in which such a resin composition is used for the resin layer 3 can maintain the desired characteristics over a long period of time. The amount of the heat aging resistance agent added is preferably in the range of 1 to 5 parts by mass per 100 parts by mass of the resin component of the resin composition.

The moisture-heat resistance agent is an additive that has the effect of improving the moisture-heat resistance of the resin composition. As the moisture-heat resistance agent, carbodiimide compounds or epoxy compounds are preferable, with epoxy compounds being more preferable.

As carbodiimide compounds, any compound having one or more carbodiimide groups in the molecule may be used, and examples include monofunctional carbodiimide compounds such as N,N'-diisopropylcarbodiimide, N,N'-di(o-tolyl)carbodiimide, N,N'-dicyclohexylcarbodiimide, and N,N'-bis(2,6-diisopropylphenyl)carbodiimide; bifunctional carbodiimide compounds such as p-phenylene-bis(2,6-xylylcarbodiimide), p-phenylene-bis(t-butylcarbodiimide), p-phenylene-bis(mesitylcarbodiimide), tetramethylene-bis(t-butylcarbodiimide), and cyclohexane-1,4-bis(methylene-t-butylcarbodiimide); and polyfunctional carbodiimide compounds such as condensates of isocyanate monomers, for example. Among these, polyfunctional carbodiimide compounds are preferable. Here, polyfunctional carbodiimide compounds refer to compounds having two or more carbodiimide groups. Examples of polyfunctional carbodiimide compounds include, for example, polyfunctional carbodiimide compounds commonly known as product names, such as Carbodilite LA-1 (manufactured by Nisshinbo, Inc.), Carbodilite HMV-8CA (manufactured by Nisshinbo, Inc.), Carbodilite HMV-15CA (manufactured by Nisshinbo, Inc.), Elastostab H01 (manufactured by Nisshinbo, Inc.), and Stabaxol P (manufactured by RheinChemie). These carbodiimide compounds can be used alone or in combinations of two or more types.

As epoxy compounds, specific examples include epoxidized soybean oil, epoxidized linseed oil, phenyl glycidyl ether, allyl glycidyl ether, tert-butylphenyl glycidyl ether, 3,4-epoxycyclohexylmethyl-3',4'-epoxycyclohexyl carboxylate, 3,4-epoxy-6-methylcyclohexylmethyl-3',4'-epoxy-6'-methylcyclohexyl carboxylate, 2,3-epoxycyclohexylmethyl-3',4'-epoxycyclohexyl carboxylate, 4-(3,4-epoxy-5-methylcyclohexyl)butyl-3',4'-epoxycyclohexyl carboxylate, 3,4-epoxycyclohexyl ethylene oxide, cyclohexylmethyl-3,4-epoxycyclohexyl carboxylate, 3,4-epoxy-6-methylcyclohexylmethyl-6'-methylcyclohexyl carboxylate, bisphenol A diglycidyl ether, tetrabromobisphenol A glycidyl ether, phthalic acid diglycidyl ester, hexahydrophthalic acid diglycidyl ester, bis-epoxydicyclopentadienyl ether, bis-epoxyethylene glycol, bis-epoxycyclohexyl adipate, butadiene diepoxide, tetraphenylethylene epoxide, octylepoxytartrate, epoxidized polybutadiene, 3,4-dimethyl-1,2-epoxycyclohexane, 3,5-dimethyl-1,2-epoxycyclohexane, 3-methyl-5-tert-butyl-1,2-epoxycyclohexane, octadecyl-2,2-dimethyl-3,4-epoxycyclohexyl carboxylate, n-butyl-2,2-dimethyl-3,4-epoxycyclohexyl carboxylate, cyclohexyl-2-methyl-3,4-epoxycyclohexyl carboxylate, n-butyl-2-isopropyl-3,4-epoxy-5-methylcyclohexyl carboxylate, octadecyl-3,4-epoxycyclohexyl carboxylate, 2-ethylhexyl-3',4'-epoxycyclohexyl carboxylate, 4,6-dimethyl-2,3-epoxycyclohexyl-3',4'-epoxycyclohexyl carboxylate, 4,5-epoxytetrahydrophthalic anhydride, 3-tert-butyl-4,5-epoxytetrahydrophthalic anhydride, diethyl-4,5-epoxy-cis-1,2-cyclohexyl dicarboxylate, and di-n-butyl-3-tert-butyl-4,5-epoxy-cis-1,2-cyclohexyl dicarboxylate. These epoxy compounds can be used alone or in combinations of two or more types.

By adding a moisture-heat resistance agent to the resin composition, the moisture and heat resistance of the resin composition is improved and the laminate 1 in which such a resin composition is used for the resin layer 3 can maintain the desired properties over a long period of time. The amount of the moisture-heat resistance agent added is preferably in the range of 1 to 15 parts by mass per 100 parts by mass of the resin component in the resin composition.

The preparation method of the above-described resin composition is not particularly limited. Additives may be added after the resin components are mixed, or the resin components and the additive may be mixed together at once, or a resin component in which additives have been added in advance may be mixed, or a resin component in which additives have been added and a resin component without the additives can be mixed.

The resin composition can be processed into a resin layer 3 of the desired shape using various molding methods. Here, injection molding is preferable as the molding method.

### <Method for manufacturing a laminate>

A method for manufacturing a laminate of the present embodiment is a method for manufacturing a laminate including a rubber layer made of a vulcanized rubber and a resin layer, wherein the rubber layer and the resin layer are bonded together. The method for manufacturing a laminate of the present embodiment includes a step of applying a surface treatment to at least a part of the surface of the resin layer that is to be bonded to the rubber layer, and a step of applying a surface treatment such that the ratio of the height of the peak derived from the (010) plane to the height of the peak derived from the (100) plane in the X-ray diffraction [(the height of the peak derived from the (010) plane) / (the height of the peak derived from the (100) plane)] of at least a part of the surface of the rubber layer that is to be bonded to the resin layer is 1.1 or more, and a step of bonding the surface of the rubber layer that has been surface-treated and the surface of the resin layer that has been surface-treated, without using an adhesive. It should be noted that the order of the step of applying a surface treatment to the rubber layer and the step of applying a surface treatment to the resin layer is not limited.

By applying the surface treatment to at least a part of the surface of the rubber layer to be bonded to the resin layer, the reactivity of the rubber layer to the resin layer can be improved.

Also, by applying the surface treatment such that the ratio of the height of the peak derived from the (010) plane to the height of the peak derived from the (100) plane of at least a part of the surface of the resin layer to be bonded to the rubber layer in the X-ray diffraction is 1.1 or more, the reactivity of the resin layer to the rubber layer can be improved.

Furthermore, by bonding the surface of the rubber layer that has been surface-treated and the surface of the resin layer that has been surface-treated without using an adhesive, a laminate with a high bonding strength between the rubber layer and the resin layer can be obtained while eliminating the complexity of the manufacturing.

Therefore, according to the method for manufacturing a laminate of the present embodiment, a laminate with excellent bonding strength can be easily obtained.

According to the method for manufacturing a laminate of the present embodiment, the laminate as described above is obtained, and the details of the laminate and the elements thereof, such as the rubber layer and the resin layer, are as described above. It should be noted that the method for manufacturing a laminate of the present embodiment is particularly useful for obtaining a laminate without using an adhesive, from a resin layer that has been molded and a rubber layer made of a vulcanized rubber.

The method for manufacturing a laminate of the present embodiment includes a step of applying a surface treatment to at least a part of the surface of the rubber layer that is to be bonded to the resin layer. A chlorination treatment is preferable as a surface treatment for the rubber layer, as described in the "Laminate" section of the present embodiment. As the chemical agent used in the chlorination treatment, a hypochlorous acid aqueous solution and chlorinated cyanuric acid are preferable.

The method for manufacturing a laminate of the present embodiment includes a step of applying a surface treatment such that the ratio of the height of the peak derived from the (010) plane to the height of the peak derived from the (100) plane in X-ray diffraction [(the height of the peak derived from the (010) plane) / (the height of the peak derived from the (100) plane)] of at least a part of the surface of the resin layer to be bonded with the rubber layer is 1.1 or more. Here, a combination of a heat treatment and cooling treatment or a solvent treatment is preferable as the surface treatment applied to the resin layer.

As mentioned above, after a tread member is removed from a tire including a resin-made skeleton member and the tread member made of vulcanized rubber *(i.e.,* after retreading), the surface of the resin-made skeleton member has progressed crystallization of the resin. Here, after the tread member is removed, a buffing (polishing) treatment is usually performed to smooth the surface of the resin-made skeleton member. It is believed that this buffing treatment removes the skin layer of the resin and accelerates crystallization of the surface of the resin-made skeleton member compared to a new product.

On the other hand, when a heat treatment is applied to the resin-made skeleton member (resin layer) after the buffing treatment and a cooling treatment is performed, the crystallinity of the surface of the resin layer decreases, making the peak derived from the (100) plane smaller, and the ratio of the height of the peak derived from the (010) plane to the height of the peak derived from the (100) plane in X-ray diffraction can be made 1.1 or more.

Here, the temperature for the heat treatment (set temperature of the heat treatment apparatus) is preferably adjusted according to the melting point of the resin component used in the resin layer and the distance from the heat source to the resin layer. For example, the temperature is preferably at or above the melting temperature of the resin layer, and in one example, a temperature of 430°C or higher is preferable.

In addition, the cooling treatment is preferably rapid cooling. For example, it is preferable to press the resin layer against a cooled metal plate. By performing the cooling treatment, the melted resin solidifies in a low-crystallinity state, resulting in a resin layer with low crystallinity. The temperature for the cooling (rapid cooling) treatment depends on the heat treatment temperature, but for example, a temperature of 15°C or below is preferable, and 10°C or below is even more preferable.

Furthermore, performing a solvent treatment on the resin-made skeleton member (resin layer) after the buffing treatment also decreases the crystallinity of the surface of the resin layer, making the peak derived from the (100) plane smaller, and the ratio of the height of the peak derived from the (010) plane to the height of the peak derived from the (100) plane in X-ray diffraction can be made 1.1 or more.

Here, the solvent used for the solvent treatment depends on the type of resin component used in the resin layer. For example, halogenated alcohols are preferable, and hexafluoroisopropanol (HFIP) is particularly preferable. HFIP is excellent in dissolving crystalline polymers and is particularly useful for reducing the crystallinity of the surface of the resin layer. By applying a solvent treatment to the resin layer, the surface of the resin layer is temporarily dissolved, and the resin precipitates in a low-crystallinity state during the vaporization of the solvent (drying), resulting in a resin layer with low crystallinity.

The surface treatment step of the resin layer is preferably performed such that the ratio of the area of the peak derived from the (010) plane to the area of the peak derived from the (100) plane in X-ray diffraction [(the area of the peak derived from the (010) plane) / (the area of the peak derived from the (100) plane)] of at least a part of the surface of the resin layer that is to be bonded to the rubber layer is 1.3 or more. By ensuring that the ratio of the area of the peak derived from the (010) plane to the area of the peak derived from the (100) plane in X-ray diffraction [(the area of the peak derived from the (010) plane) / (the area of the peak derived from the (100) plane)] is 1.3 or more in at least a part of the surface of the resin layer that is to be bonded to the rubber layer, the bonding strength between the rubber layer and the resin layer can be further enhanced.

The method for manufacturing a laminate of the present embodiment includes a step of bonding the surface of the rubber layer that has been surface-treated and the surface of the resin layer that has been surface-treated, without using an adhesive. The bonding step is preferably performed by heating the surface of the rubber layer that has been surface-treated and the surface of the resin layer that has been surface-treated while they are in contact with each other. Here, the heating temperature is preferably between 120°C and 150°C. When the heating temperature is above 120°C or higher, the bonding strength between the rubber layer and the resin layer tends to be improved. Additionally, when the heating temperature is 150°C or lower, it becomes easier to suppress the deformation of the resin layer.

In one example, it is preferable that the laminate is placed into a bag (envelope) while the surface of the rubber layer that has been surface-treated and the surface of the resin layer that has been surface-treated are in contact with each other, the bag is then placed into an autoclave, the bag is evacuated, and pressure and heat are applied via the autoclave to bond the rubber layer and the resin layer together. By evacuating the bag, the adhesion between the rubber layer and the resin layer is improved. Moreover, applying pressure and heat via the autoclave further promotes the reaction between the surface of the rubber layer that has been surface-treated and the surface of the resin layer that has been surface-treated, thereby improving the bonding strength between the rubber layer and the resin layer.

Here, the degree of evacuation in the bag and the pressure and temperature inside the autoclave can be adjusted according to the type of materials used, and the type and extent of the surface treatment applied.

The method for manufacturing a laminate in the present embodiment may also include another step. An example of another step is the above-described buffing treatment (polishing treatment). By performing a buffing treatment to smooth the surface of the resin layer, the contact area between the rubber layer and the resin layer can be increased.

### <Tire>

A tire of the present embodiment includes the laminate of the present embodiment described above. Since the tire of the present embodiment includes the laminate of the present embodiment, it has excellent durability.

The tire of the present embodiment may be either an pneumatic tire or a non-pneumatic tire. Here, it is preferable that the pneumatic tire and the non-pneumatic tire have a skeleton member made of a resin and a tread member made of a rubber, where at least the outer peripheral part of the skeleton member corresponds to the above-described resin layer and the tread member corresponds to the above-described rubber layer.

In one embodiment of the present disclosure, the tire is a non-pneumatic tire including an inner cylinder that is to be mounted on a wheel, an outer cylinder that surrounds the inner cylinder from the outer side in the tire radial direction, a plurality of connecting members arranged along the tire circumferential direction between the inner cylinder and the outer cylinder to connect the cylinders, and a tread member provided on the outer side of the outer cylinder in the tire radial direction, and the outer cylinder is the resin layer and the tread member is the rubber layer. The non-pneumatic tire has a high bonding strength between the inner cylinder, outer cylinder, connecting members, as the skeleton member, and the tread member, and has an excellent durability.

The inner cylinder and connecting members as the skeleton member may be made of the same material (resin composition) as the outer cylinder, or they may be made of a different material (resin composition). However, from the perspective of improving the productivity of the non-pneumatic tire, it is preferable that they are made of the same material (resin composition) as the outer cylinder. It is even more preferable that the inner cylinder, outer cylinder, and connecting members are integrally formed.

Next, the structure of the non-pneumatic tire according to one embodiment of the present disclosure is described.

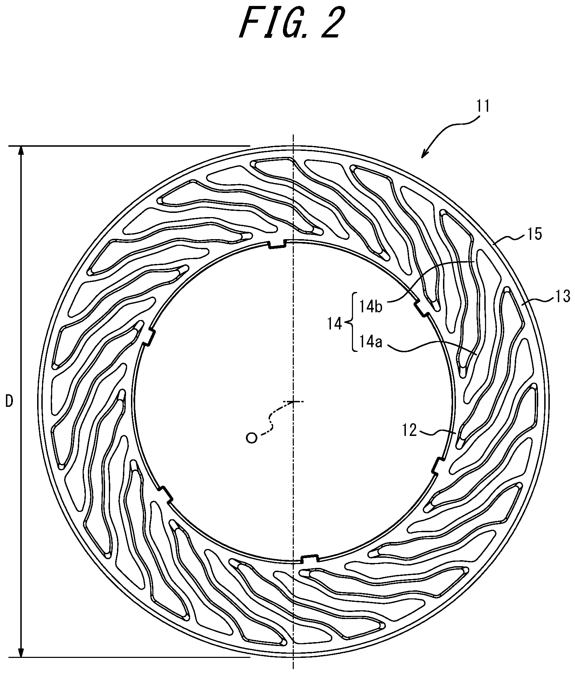

FIG. 2 is an outline view schematically illustrating the structure of a non-pneumatic tire according to one embodiment of the present disclosure, viewed from the side of the tire. In the following description, the scales of elements in FIG. 2 are adjusted appropriately to make the elements understandable.

As illustrated in FIG. 2, a non-pneumatic tire 11 of the present embodiment includes an inner cylinder 12 that is to be mounted on a wheel (not illustrated), an outer cylinder 13 surrounding the inner cylinder 12 from the outer side in the tire radial direction, and a plurality of elastically deformable connecting members 14 arranged along the tire circumferential direction between the inner cylinder 12 and the outer cylinder 13, which connect the inner cylinder 12 and the outer cylinder 13 while allowing relative displacement between them. A tread member 15 is fitted on the outer peripheral surface of the outer cylinder 13.

Here, the inner cylinder 12, outer cylinder 13, and tread member 15 are formed annularly, and their central axes are aligned on a common axis. In this specification, this common axis is referred to as the central axis O, and the direction along the central axis O is referred to as the tire width direction. Also, the direction of rotation around the central axis O in a side view from the tire width direction is referred to as the tire circumferential direction, and the direction perpendicular to the central axis O is referred to as the tire radial direction.

The inner cylinder 12 is to be mounted on the vehicle axle (not illustrated) via a wheel of a vehicle. The materials for the wheel and axle may be metal materials such as aluminum, aluminum alloys, and steel. The central axes of the inner cylinder 12 and outer cylinder 13 is arranged coaxially with the central axis O. The inner cylinder 12, outer cylinder 13, and connecting members 14 are arranged such that their central portions in the tire width direction align with each other.

In the present embodiment, the inner cylinder 12, outer cylinder 13, and connecting members 14, as the skeleton member, are integrally formed from a resin composition. This allows the inner cylinder 12, outer cylinder 13, and connecting members 14 to be molded by injection molding, making them suitable for mass production.

It should be noted that the inner cylinder 12, outer cylinder 13, and connecting members 14 may be formed separately.

The tread member 15 is made from the rubber layer of the laminate described above, and is formed from vulcanized rubber produced by vulcanizing a rubber composition including natural rubber, etc., for example. By forming the tread member 15 from vulcanized rubber, the wear resistance of the tread member 15 is enhanced.

Each connecting member 14 is formed into a curved rectangular plate shape as a whole, with the front and back surfaces facing the tire circumferential direction and the sides facing the tire width direction. The connecting members 14 are made from an elastically deformable material and connect the outer peripheral surface of the inner cylinder 12 and the inner peripheral surface of the outer cylinder 13, allowing elastic displacement between them. A plurality of connecting members 14 are arranged at equal intervals in the tire circumferential direction. The number of connecting members 14 is 30 in the example illustrated in FIG 2; however, the number of connecting members 14 in the tire of the present disclosure is not limited to this number.

Each of the plurality of connecting members 14 has an inner part 14a connected to the inner cylinder 12 and an outer part 14b connected to the outer cylinder 13. The inner part 14a and outer part 14b are connected to each other at the central portion of the connecting members 14 in the tire radial direction. During driving, the connecting members 14 deform elastically under load, absorbing vibrations transmitted from the ground to the vehicle.

In the non-pneumatic tire 11 according to the present embodiment, the outer cylinder 13 corresponds to the resin layer, and the tread member 15 corresponds to the rubber layer. This non-pneumatic tire 11 has high bonding strength between the outer cylinder 13 as the skeleton member and the tread member 15, offering excellent durability.

### EXAMPLES

The present disclosure will be described in more detail with reference to the following examples, but the present disclosure is not limited to the examples below.

### (Example 1)

### (1) Production of Resin-made Skeleton Member

A resin composition was produced using a polyester-based thermoplastic elastomer (TPC, manufactured by Toyobo Co., Ltd., Pelprene P-type). This resin composition was injected molded at 260°C to form a resin-made skeleton member for a 10-inch size.

### (2) Production of Ring Tread Member Made of Rubber

A rubber composition was produced by adding 50 parts by mass of carbon black and additives such as a curing agent, vulcanization accelerator, and softener in appropriate amounts, to 30 parts by mass of butadiene rubber and 70 parts by mass of natural rubber. This rubber composition was molded into a certain shape and then vulcanized at 160°C for 15 minutes to form a ring-shaped tread member made of rubber for a 10-inch size. A chlorination treatment was applied to the inner peripheral surface of this tread member by coating it with Chemlok 7701 (manufactured by LORD Japan Inc.).

### (3) Production of Non-Pneumatic Tire

The tread member and the resin-made skeleton member were placed in an envelope, with the inner peripheral surface of the tread member (which had been treated with chlorination) in contact with the outer peripheral surface of the resin-made skeleton member (outer surface of the outer cylinder). The envelope was then placed in an autoclave (manufactured by Hanyuda Co., Ltd.). The pressure in the envelope was reduced to -0.01 MPa (relative to atmospheric pressure) and held under conditions of a temperature of 130°C and a pressure of 0.7 MPa for 30 minutes to bond the tread member and the resin-made skeleton member together, to thereby produce a non-pneumatic tire for a 10-inch size.

The produced non-pneumatic tire had a diameter D in the tire radial direction (the outer diameter of the tread member 15) of 23.4 cm, an outer diameter of the outer cylinder 12 of 23.0 cm, an inner diameter of the inner cylinder 13 of 14.9 cm, and a width in the tire width direction (the width of the outer cylinder 12, inner cylinder 13, and connecting members 14) of 5.6 cm. The structure of the tire was similar to the structure in the schematic diagram illustrated in FIG 2.

### (Comparative Example 1)

In a manner similar to Example 1, after a resin-made skeleton member was produced, a buffing treatment was performed on the outer surface of the resin-made skeleton member (outer surface of the outer cylinder).

A non-pneumatic tire for the 10-inch size was produced in a manner similar to Example 1 except that the resultant resin-made skeleton member that had undergone the buffing treatment was used.

### (Comparative Example 2)

In a manner similar to Example 1, after a resin-made skeleton member was produced, a buffing treatment was performed on the outer surface of the resin-made skeleton member (outer surface of the outer cylinder). Next, the outer surface of the resin-made skeleton member (outer surface of the outer cylinder) was heated by using Leister (manufactured by Makita Corporation) for the resin-made skeleton member that had undergone the buffing treatment with a setting temperature of 450°C and then left to cool in air.

A non-pneumatic tire for the 10-inch size was produced in a manner similar to Example 1 except that the resin-made skeleton member after the buffing treatment, heating, and cooling was used.

### (Example 2)

In a manner similar to Example 1, after a resin-made skeleton member was produced, a buffing treatment was performed on the outer surface of the resin-made skeleton member (outer surface of the outer cylinder). Next, the outer surface of the resin-made skeleton member (outer surface of the outer cylinder) was heated by using Leister (manufactured by Makita Corporation) for the resin-made skeleton member that had undergone the buffing treatment with a setting temperature of 450°C, and then a metal plate cooled to 10°C was pressed against the resin-made skeleton member to rapidly cool it.

A non-pneumatic tire for the 10-inch size was produced in a manner similar to Example 1 except that the resin-made skeleton member after the buffing treatment, heating, and rapid cooling was used.

### (Example 3)

In a manner similar to Example 1, after a resin-made skeleton member was produced, a buffing treatment was performed on the outer surface of the resin-made skeleton member (outer surface of the outer cylinder). Next, the outer surface of the resin-made skeleton member (outer surface of the outer cylinder) was heated by using Leister (manufactured by Makita Corporation) for the resin-made skeleton member that had undergone the buffing treatment with a setting temperature of 450°C, and then a metal plate cooled to 0°C was pressed against the resin-made skeleton member to rapidly cool it.

A non-pneumatic tire for the 10-inch size was produced in a manner similar to Example 1 except that the resin-made skeleton member after the buffing treatment, heating and, rapid cooling was used.

### (Comparative Example 3)

In a manner similar to Example 1, after a resin-made skeleton member was produced, a buffing treatment was performed on the outer surface of the resin-made skeleton member (outer surface of the outer cylinder). Next, the outer surface of the resin-made skeleton member (outer surface of the outer cylinder) was heated by using Leister (manufactured by Makita Corporation) for the resin-made skeleton member that had undergone the buffing treatment with a setting temperature of 420°C, and then a metal plate cooled to 10°C was pressed against the resin-made skeleton member to rapidly cool it.

A non-pneumatic tire for the 10-inch size was produced in a manner similar to Example 1 except that the resin-made skeleton member after the buffing treatment, heating and, rapid cooling was used.

### (Example 4)

In a manner similar to Example 1, after a resin-made skeleton member was produced, a buffing treatment was performed on the outer surface of the resin-made skeleton member (outer surface of the outer cylinder). Next, a solvent treatment was applied on the outer surface of the buffed resin-made skeleton member (outer surface of the outer cylinder) with hexafluoroisopropanol (HFIP).

A non-pneumatic tire for the 10-inch size was produced in a manner similar to Example 1 except that the resin-made skeleton member after the buffing treatment and solvent treatment was used.

### <X-ray Diffraction Analysis of Resin-made Skeleton Member>

The surface of each resin-made skeleton member produced was analyzed by X-ray diffraction using an X-ray diffraction device (XRD, manufactured by Rigaku Corporation, SmartLab). The height of the peak derived from the (010) plane and the height of the peak derived from the (100) plane were measured, and their ratio was determined. In addition, the Pseudo Voigt function was used as fitting program to separate peaks measured by X-ray diffraction. The area of the peak derived from the (010) plane and the area of the peak derived from the (100) plane were calculated, and their ratio was determined. The results are summarized in Table 1.

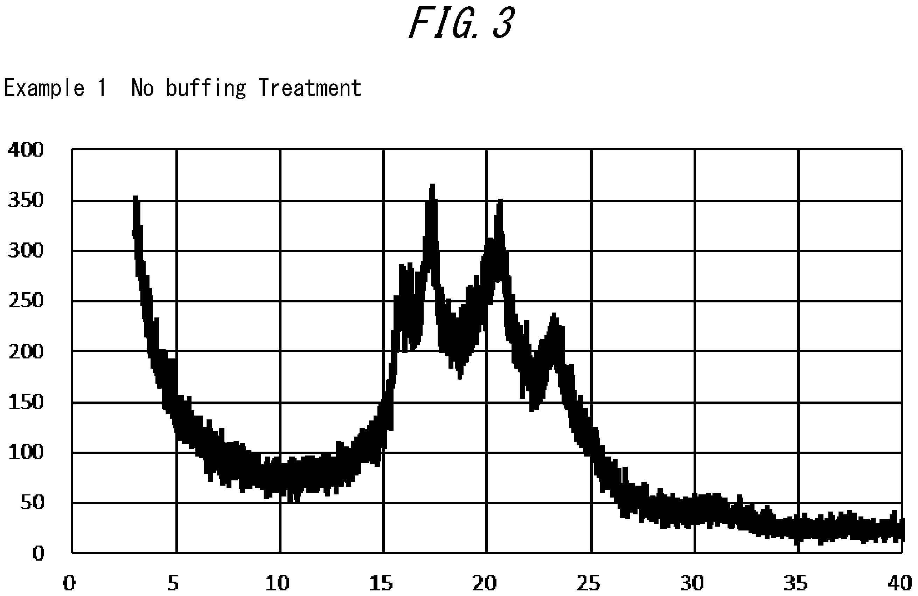

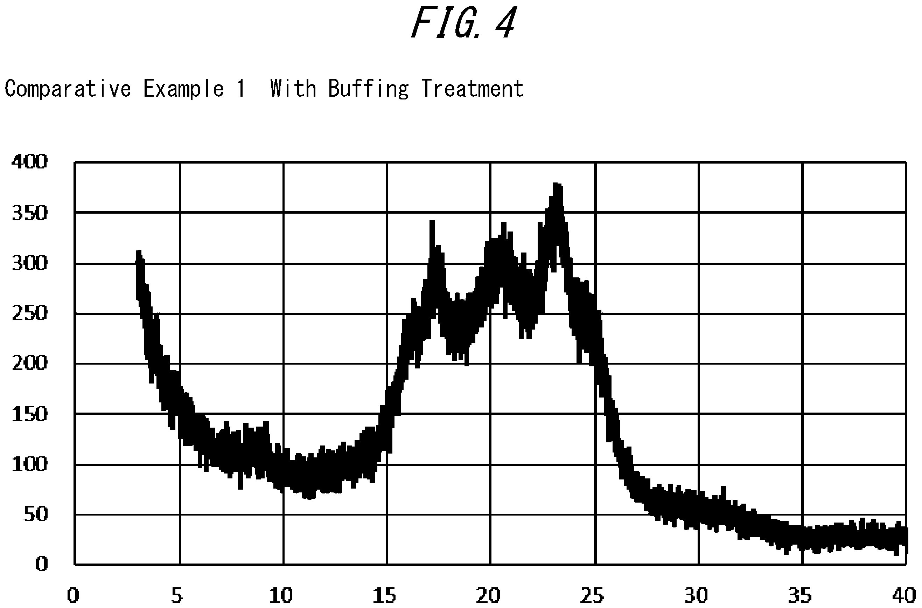

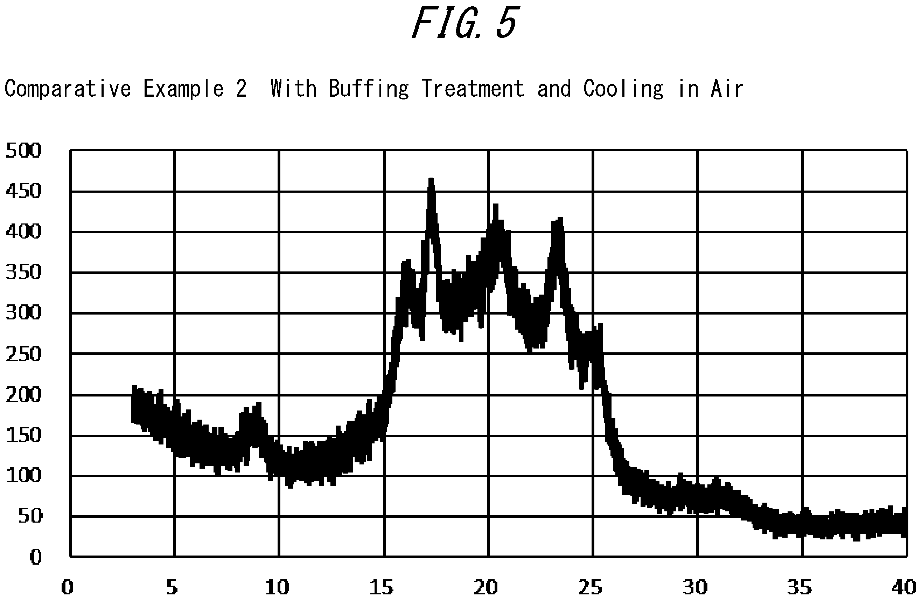

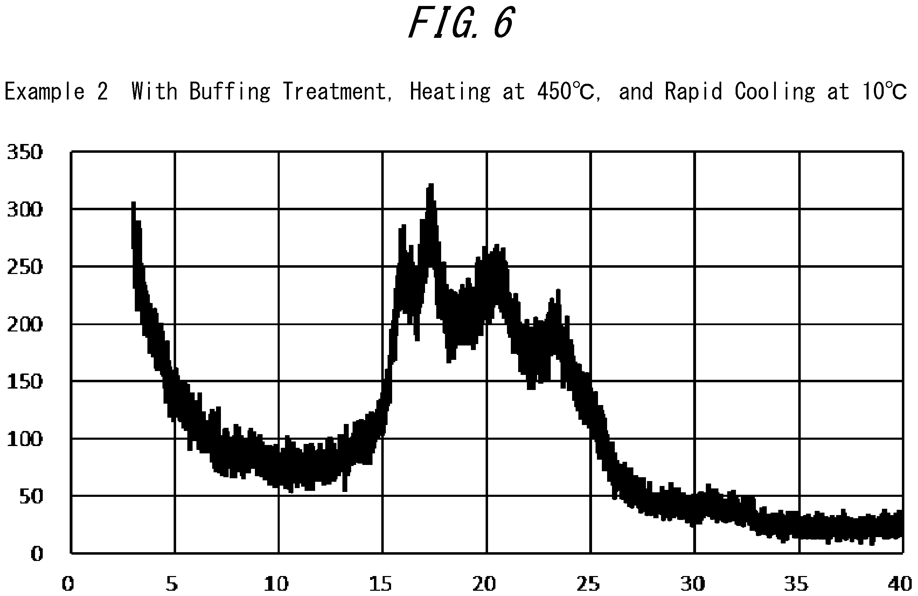

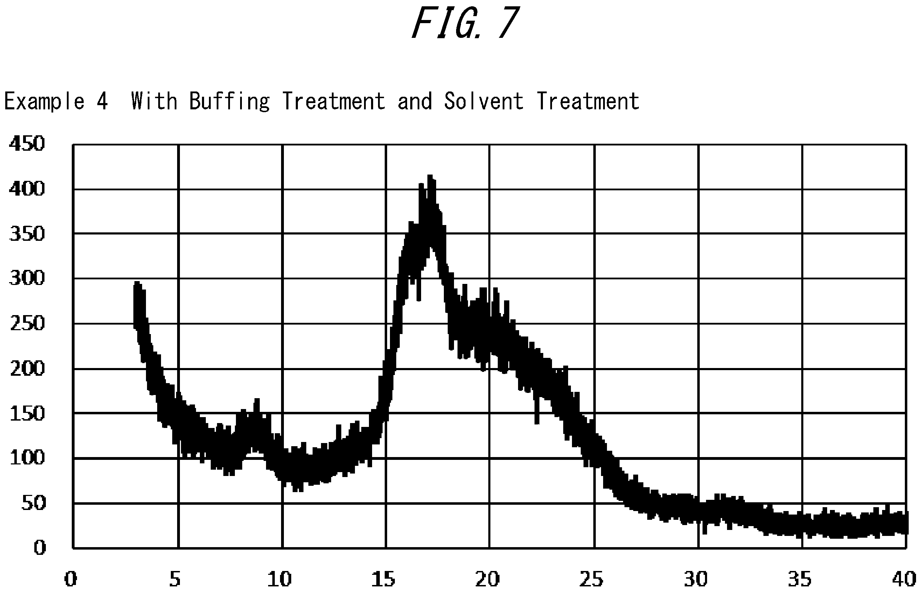

Furthermore, the X-ray diffraction chart of the surface of the resin-made skeleton member obtained in Example 1 is illustrated in FIG. 3, the X-ray diffraction chart of the surface of the resin-made skeleton member obtained in Comparative Example 1 is illustrated in FIG. 4, the X-ray diffraction chart of the surface of the resin-made skeleton member obtained in Comparative Example 2 is illustrated in FIG. 5, the X-ray diffraction chart of the surface of the resin-made skeleton member obtained in Example 2 is illustrated in FIG. 6, and the X-ray diffraction chart of the surface of the resin-made skeleton member obtained in Example 4 is illustrated in FIG. 7.

### <Measurement of Crystal Sizes of Resin-made Skeleton Member>

Thin sections of 10 µm to 12 µm were prepared from each resin-made skeleton member using a microtome, and analyzed under a polarizing microscope (manufactured by KEYENCE, VHX5000). In the resulting images, the length of the long sides of 20 crystals in the region from the surface of the resin-made skeleton member to a depth of 5 µm to 250 µm were measured. The average length of crystal sizes in the region up to a depth of 250 µm was calculated. If no crystals were observable, the result was marked as "ND." The results are summarized in Table 1.

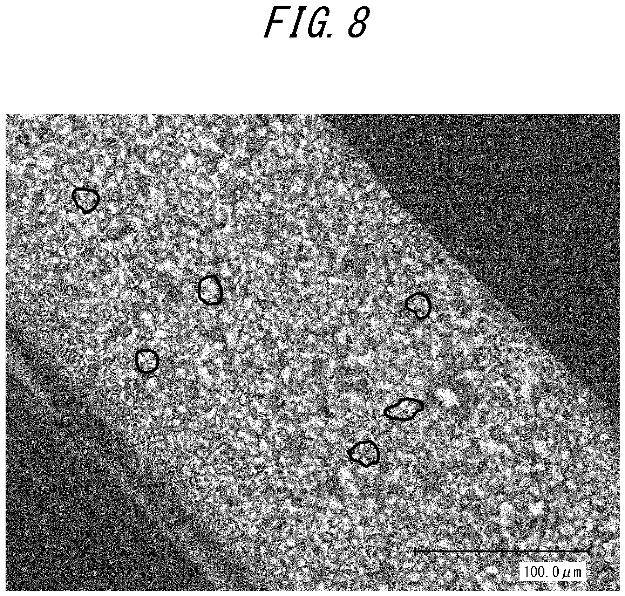

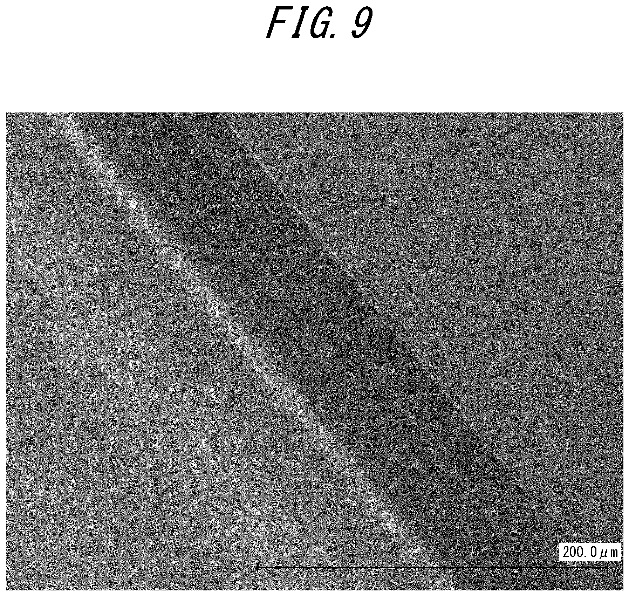

Furthermore, a polarizing microscope image of the surface of the resin-made skeleton member obtained in Comparative Example 2 is illustrated in FIG. 8, and a polarizing microscope image of the surface of the resin-made skeleton member obtained in Example 2 is illustrated in FIG. 9. The crystalline parts are encircled with curved lines in FIG. 8, while no crystals were observed in FIG. 9.

### <Peel Test (Bonding Strength Test)>

The tread member was peeled off from the resin-made skeleton member part of the non-pneumatic tire produced as described above, and the peeling mode was classified according to the following criteria.

Cohesive failure of rubber: No peeling occurred at the interface between the resin-made skeleton member and the tread member, but cohesive failure was observed in the tread member. This indicated high bonding strength between the resin-made skeleton member and the tread member.

Interface failure: Peeling occurred at the interface between the resin-made skeleton member and the tread member. This indicated low bonding strength between the resin-made skeleton member and the tread member.

### <Cleat Drum Test (Durability Test)>

Protrusions with a width of 10 mm and a height of 5 mm were attached to a drum durability testing machine. The non-pneumatic tire obtained in Example 2 was driven at 15 km/h under a constant load in a room temperature environment, and the distance traveled until failure was measured. The results were classified as follows.
Distance traveled was 10,000 km or longer: Excellent
Distance traveled less than 10,000 km: Poor

**[Table 1]**

| | | Example 1 | Comparative Example 1 | Comparative Example 2 | Example 2 | Example 3 | Comparative Example 3 | Example 4 |
|---|---|---|---|---|---|---|---|---|
| Treatment for resin-made skeleton member | Buffing treatment | No | Yes | Yes | Yes | Yes | Yes | Yes |
| | Heat temperature after buffing treatment | - | - | 450°C | 450°C | 450°C | 420°C | - |
| | Cooling method after heat treatment | - | - | Cooling in the air | Rapid cooling at 10°C | Rapid cooling at 0°C | Rapid cooling at 10°C | - |
| | Other treatment methods | - | - | - | - | - | - | Solvent treatment |
| Surface characteristics of resin-made skeleton member | Height of peak derived from (010) plane / height of peak derived from (100) plane | 1.5 | 0.9 | 1.0 | 1.4 | 1.5 | 1.0 | 1.5 |
| | Area of peak derived from (010) plane / Area of peak derived from (100) plane | 1.4 | 1.1 | 1.2 | 1.5 | 1.6 | 1.1 | 4.6 |
| | Average length of crystal sizes in region up to depth of 250 µm | ND | 18 µm | 23 µm | ND | ND | 19 µm | ND |
| Results of evaluation of tire | Peel test (peeling mode) | Cohesive failure of rubber | Interface delamination | Interface delamination | Cohesive failure of rubber | Cohesive failure of rubber | Interface delamination | Cohesive failure of rubber |
| | Cleat drum test (durability) | - | - | - | Excellent | - | - | - |

As summarized in Table 1, the non-pneumatic tires in the examples according to the present disclosure had high bonding strength between the resin-made skeleton member (resin layer) and the tread member (rubber layer), as well as high durability.

In contrast, the non-pneumatic tires in the comparative examples where the ratio of the height of the peak derived from the (010) plane to the height of the peak derived from the (100) plane in X-ray diffraction was less than 1.1 had low bonding strength between the resin-made skeleton member (resin layer) and the tread member (rubber layer).

### INDUSTRIAL APPLICABILITY

The laminate of the present disclosure can be used for tires.

### REFERENCE SIGNS LIST

1: Laminate, 2: Rubber layer, 3: Resin layer, 4: Surface-treated layer, 5: Region from the surface of resin layer up to a depth of 250 µm, 11: Non-pneumatic tire, 12: Inner cylinder, 13: Outer cylinder, 14: Connecting member, 14a: Inner part, 14b: Outer part, 15: Tread member, O: Center axis, D: Diameter in tire radial direction

## Claims

1. A laminate comprising a rubber layer made of a vulcanized rubber and a resin layer, the rubber layer and the resin layer being bonded together,
the rubber layer comprising a surface-treated layer on a surface that is bonded to the resin layer, and
a surface of the resin layer bonded to the rubber layer having a ratio of a height of a peak derived from a (010) plane to a height of a peak derived from a (100) plane in X-ray diffraction [(the height of the peak derived from the (010) plane) / (the height of the peak derived from the (100) plane)] of 1.1 or more.

2. The laminate according to claim 1, wherein the surface-treated layer of the rubber layer is a chlorinated layer.

3. The laminate according to claim 1, wherein the surface of the resin layer bonded to the rubber layer has an average length of crystal sizes in a region up to a depth of 250 µm of 10 µm or less.

4. The laminate according to claim 1, wherein the resin layer contains at least one resin component selected from the group consisting of polyester resin, modified polyolefin resin, acrylonitrile-butadiene-styrene copolymer resin, polyester-based thermoplastic elastomer, and polyolefin-based thermoplastic elastomer.

5. The laminate according to claim 4, wherein the resin layer contains polyester resin or polyester-based thermoplastic elastomer.

6. The laminate according to claim 1, wherein the surface of the resin layer bonded to the rubber layer has a ratio of an area of the peak derived from the (010) plane to an area of the peak derived from the (100) plane in X-ray diffraction [(the area of the peak derived from the (010) plane) / (the area of the peak derived from the (100) plane)] of 1.3 or more.

7. A method for manufacturing a laminate comprising a rubber layer made of a vulcanized rubber and a resin layer, the rubber layer and the resin layer being bonded together, the method comprising:
applying a surface treatment to at least a part of a surface of the rubber layer that is to be bonded with the resin layer;
applying a surface treatment such that a ratio of a height of a peak derived from a (010) plane to a height of a peak derived from a (100) plane in X-ray diffraction [(the height of the peak derived from the (010) plane) / (the height of the peak derived from the (100) plane)] of at least a part of a surface of the resin layer to be bonded to the rubber layer is 1.1 or more; and
bonding the surface of the rubber layer that has been surface-treated and the surface of the resin layer that has been surface-treated, without using an adhesive.

8. A tire comprising the laminate according to claim 1.

9. The tire according to claim 8,
wherein the tire is a non-pneumatic tire comprising an inner cylinder that is to be mounted on a wheel, an outer cylinder that surrounds the inner cylinder from an outer side in a tire radial direction, a plurality of connecting members arranged along a tire circumferential direction between the inner cylinder and the outer cylinder to connect the cylinders, and a tread member provided on an outer side of the outer cylinder in the tire radial direction, and
the outer cylinder is the resin layer, and the tread member is the rubber layer.
